# EUROPEAN PATENT SPECIFICATION

(11) **EP 0 807 904 B1**
(45) Date of publication and mention of the grant of the patent: **14.08.2002**
(21) Application number: 97113395.4
(22) Date of filing: 08.03.1995
(51) Int. Cl.: G06K 9/00, G07D 7/00

(54) **Method and apparatus for authenticating US paper currency**
Verfahren und Apparat zur Prüfung von US-Banknoten
Procédé et appareil pour vérifier billets de banque US

(30) Priority: 08.03.1994 US 207592; 29.03.1994 US 219093; 12.04.1994 US 226660; 16.05.1994 US 243807; 09.08.1994 US 287882; 04.10.1994 US 317349; 14.11.1994 US 340031; 22.12.1994 US 362848; 27.02.1995 US 394752; 07.03.1995 US 399854
(43) Date of publication of application: 19.11.1997
(62) Divisional of application: 95913629.2
(73) Proprietor: CUMMINS-ALLISON CORPORATION, Mount Prospect, Illinois 60056 (US)
(72) Inventor: Graves, Bradford T., Arlington Heights, IL 60004 (US); Mazur, Richard A., Naperville, IL 60540 (US); Mennie, Douglas U., Barrington, IL 60010 (US); Jones, William J., Kenilworth, IL 60043 (US); Raterman, Donald E., Deerfield, IL 60015 (US); Stromme, Lars R., Arlington Heights, IL 60004 (US); Bauch, Aaron M., East Setauket, NY 11733 (US); Csulits, Frank M., Gurnee, IL 60031 (US); Jones, John E., Winnetka, IL 60043 (US); Shreiter, Heinz W., Skokie, IL 60076 (US); Munro, Mark C., Park Ridge, IL 60068 (US)
(74) Representative: Grünecker, Kinkeldey, Stockmair & Schwanhäusser Anwaltssozietät

(56) References cited:
- WO-A-90/07165
- US-A- 4 451 521
- US-A- 4 653 647
- US-A- 5 295 196

## Description

The present invention relates, in general, to document identification. More specifically, the present invention relates to a method and an apparatus for authenticating documents, in particular, currency bills, as set forth in the preamble of claims 1 and 13, respectively. A method and an apparatus of this kind are known from WO 90/07165.

The aforementioned reference discloses a counterfeit detection apparatus for banknotes and other valuable documents, comprising a UV lamp and a metallized thread detector formed by a pair of metallic rollers which roll across a banknote to detect the conductivity of a metallized thread in the banknote. A drive form the rollers rotates an encoder disk, the rotational movement being monitored by a pair of photodiodes. The apparatus includes means for detecting the amount of UV abscrption and electromechanical means for auto-referencing the lamps intensity. Displays are provided to give visual or audible verification of the authenticity of the banknote. To this aim, a crude pattern recognition is effected.

US-A-5,295,196 discloses a method and apparatus for discriminating between currency bills of different denominations. The method and apparatus make use of an optical sensing and correlation technique based on the sensing of bill reflectance characteristics obtained by illuminating and scanning a bill along its narrow dimension. A series of reflectance signals are obtained by sampling and digitally processing the reflected light at a plurality of pre-defined sample points as a currency bill is moved across an illuminated strip with its narrow dimension parallel to the direction of transport of the bill. The sample data is subjected to digital processing, including a normalizing process, whereby the reflectance data represents a characteristic pattern that is unique for a given bill denomination and incorporates sufficient distinguishing features between characteristic patterns for discriminating between different currency denominations. A plurality of master characteristic patterns are generated and stored using original bills for each denomination of currency to be detected. The pattern generated by scanning a bill on the test and processing the data samples is compared with each of the prestored master patterns to generate, for each comparison, a correlation number representing the extent of similarity between corresponding ones of the plurality of data samples for the compared patterns. Denomination identification is based on designating the scanned bill as belonging to the denomination corresponding to the stored master pattern for which the correlation number resulting from pattern comparison is determined to be the highest.

From US-A-4,451,521, security paper with luminescing authenticity characteristics which after excitation with invisible light emit exclusively invisible light of different wavelengths as authenticity signal. The corresponding test apparatus makes it possible to check the authenticity of the security paper in the presence of customers but unnoticed by them.

US-A-4,653,647 discloses a sorting and stacking apparatus for currency notes having an inspecting section for inspecting the denomination of a currency note, a normal note, a damaged note, an obverse-presented note and a reverse-presented note. The discrimination technique is not disclosed, rather, in this respect, reference is made in the document to US-A-4,352,988.

Thus, a variety of techniques and apparatus have been used to satisfy the requirements of automated currency handling systems. At the lower end of sophistication in this area of technology are systems capable of handling only a specific type of currency, such as a specific dollar denomination, while rejecting all other currency types. At the upper end are complex systems which are capable of identifying and discriminating among and automatically counting multiple currency denominations.

Currency discrimination systems typically employ either magnetic sensing or optical sensing for discriminating among different currency denominations. Magnetic sensing is based on detecting the presence or absence of magnetic ink in portions of the printed indicia on the currency by using magnetic sensors, usually ferrite core-based sensors, and using the detected magnetic signals, after undergoing analog or digital processing, as the basis for currency discrimination. A variety of currency characteristics can be measured using magnetic sensing. These include detection of patterns of changes in magnetic flux, patterns of vertical grid lines in the portrait area of bills, the presence of a security thread, total amount of magnetizable material of a bill, patterns from sensing the strength of magnetic fields along a bill, and other patterns and counts from scanning different portions of the bill such as the area in which the denomination is written out.

The more commonly used optical sensing techniques, on the other hand, are based on detecting and analyzing variations in light reflectance or transmissivity characteristics occurring when a currency bill is illuminated and scanned by a strip of focused light. The subsequent currency discrimination is based on the comparison of sensed optical characteristics with prestored parameters for different currency denominations, while accounting for adequate tolerances reflecting differences among individual bills of a given denomination. A variety of currency characteristics can be measured using optical sensing. These include detection of a bill's density, color, length and thickness, the presence of a security thread and holes, and other patterns of reflectance and transmission. Color detection techniques may employ color filters, colored lamps, and/or dichroic beamsplitters.

In addition to magnetic and optical sensing, other techniques of detecting characteristic information of currency include electrical conductivity sensing, capacitive sensing (such as for watermarks, security threads, thickness, and various dielectric properties) and mechanical sensing (such as for size, limpness, and thickness).

A major obstacle in implementing automated currency discrimination systems is obtaining an optimum compromise between the criteria used to adequately define the characteristic pattern for a particular currency denomination, the time required to analyze test data and compare it to predefined parameters in order to identify the currency bill under scrutiny, and the rate at which successive currency bills may be mechanically fed through and scanned. Even with the use of microprocessors for processing the test data resulting from the scanning of a bill, a finite amount of time is required for acquiring samples and for the process of comparing the test data to stored parameters to identify the denomination of the bill.

Some of the currency scanning systems today scan for two or more characteristics of bills to discriminate among various denominations or to authenticate their genuineness. However, these systems do not efficiently utilize the information which is obtained. Rather, these systems generally conduct comparison based on the two or more characteristics independently of each other. As a result, the time required to make these comparisons is increased which in turn can reduce the operating speed of the entire scanning system.

Recent currency discriminating systems rely on comparisons between a scanned pattern obtained from a subject bill and sets of stored master patterns for the various denominations among which the system is designed to discriminate. As a result, the master patterns which are stored play an important role in a discrimination system's ability to discriminate among bills of various denominations as well as between genuine bills and counterfeit bills. These master patterns have been generated by scanning bills of various denominations known to be genuine and storing the resulting patterns. However, a pattern generated by scanning a genuine bill of a given denomination can vary depending upon a number of factors such as the condition of the bill, e.g., whether it is a crisp bill in new condition or a worn, flimsy bill, as well as year in which the bill was printed, e.g., before or after security threads were incorporated into bills of some denominations. Likewise, it has been found that bills which have experienced a high degree of usage may shrink, resulting in a reduction of the dimensions of such bills. Such shrinkage may likewise result in variations in scanning patterns. As a result, if, for example, a $20 master pattern is generated by scanning a crisp, genuine $20 bill, the discrimination system may reject an unacceptable number of genuine but worn $20 bills. Likewise, if a $20 master pattern is generated using a very worn, genuine $20 bill, the discrimination system may reject an unacceptable number of genuine but crisp $20 bills.

It has been found that scanning U.S. bills of different denominations along a central portion thereof provides scanning patterns sufficiently divergent to enable accurate discrimination between different denominations. Such a discrimination device is disclosed in U.S. Pat. No. 5,295,196. However, currencies of other countries can differ from U.S. currency and from each other in a number of ways. For example, while all denominations of U.S. currencies are the same size, in many other countries currencies vary in size by denomination. Furthermore, there is a wide variety of bill sizes among different countries. In addition to size, the color of currency can vary by country and by denomination. Likewise, many other characteristics may vary between bills from different countries and of different denominations.

As a result of the wide variety of currencies used throughout the world, a discrimination system designed to handle bills of one country generally can not handle bills from another country. Likewise, the method of discriminating bills of different denominations of one country may not be appropriate for use in discriminating bills of different denominations of another country. For example, scanning for a given characteristic pattern along a certain portion of bills of one country, such as optical reflectance about the central portion of U.S. bills, may not provide optimal discrimination properties for bills of another country, such as German marks.

Furthermore, there is a distinct need for an identification system which is capable of accepting bills of a number of currency systems, that is, a system capable of accepting a number of bill-types. For example, a bank in Europe may need to process on a regular basis French, British, German, Dutch, etc. currency, each having a number of different denomination values.

Some of the optical scanning systems available today employ two optical scanheads disposed on opposite sides of a bill transport path. One of the optical scanheads scans one surface (e.g., green surface) of a currency bill to obtain a first set of reflectance data samples, while the other optical scanhead scans the opposite surface (e.g., black surface) of the currency bill to obtain a second set of reflectance data samples. These two sets of data samples are then processed and compared to stored characteristic patterns corresponding to the green surfaces of currency bills of different denominations. If degree of correlation between either set of data samples and any of the stored characteristic patterns is greater than a predetermined threshold, then the denomination of the bill is positively identified.

A drawback of the foregoing technique for scanning both surfaces of a currency bill is that it is time-consuming to process and compare both sets of data samples for the scanned bill to the stored characteristic patterns. The set of data samples corresponding to the black surface of the scanned bill are processed and compared to the stored characteristic patterns even though no match should be found. As previously stated, the stored characteristic patterns correspond to the green surfaces of currency bills of different denominations.

Another drawback of the foregoing scanning technique is that the set of data samples corresponding to the black surface of the scanned bill occasionally leads to false positive identification of a scanned bill. The reason for this false positive identification is that if a scanned bill is slightly shifted in the lateral direction relative to the bill transport path, the set of data samples corresponding to the black surface of the scanned bill may sufficiently correlate with one of the stored characteristic patterns to cause a false positive identification of the bill. The degree of correlation between the set of "black" data samples and the stored "green" characteristic patterns should, of course, not be greater than the predetermined threshold for positively identifying the denomination of the bill.

Furthermore, in currency discriminating systems that rely on comparisons between a scanned pattern obtained from a subject bill and sets of stored master patterns, the ability of a system to accurately line up the scanned patterns to the master patterns to which they are being compared is important to the ability of a discrimination system to discriminate among bills of various denominations as well as between genuine bills and counterfeit bills without rejecting an unacceptable number of genuine bills. However, the ability of a system to line up scanned and master patterns is often hampered by the improper initiation of the scanning process which results in the generation of scanned patterns. If the generation of scanned patterns is initiated too early or too late, the resulting pattern will not correlate well with the master pattern associated with the identity of the currency; and as a result, a genuine bill may be rejected. There are a number of reasons why a discrimination system may initiate the generation of a scanned pattern too early or too late, for example, stray marks on a bill, the bleeding through of printed indicia from one bill in a stack onto an adjacent bill, the misdetection of the beginning of the area of the printed indicia which is desired to be scanned, and the reliance on the detection of the edge of a bill as the trigger for the scanning process coupled with the variance, from bill to bill, of the location of printed indicia relative to the edge of a bill. Therefore, there is a need to overcome the problems associated with correlating scanned and master patterns.

In some currency discriminators bills are transported, one at a time, passed a discriminating unit. As the bills pass the discriminating unit, the denomination of each bill is determined and a running total of each particular currency denomination and/or of the total value of the bills that are processed is maintained. A number of discriminating techniques may be employed by the discriminating unit including optical or magnetic scanning of bills. A plurality of output bins are provided and the discriminator includes means for sorting bills into the plurality of bins. For example, a discriminator may be designed to recognize a number of different denominations of U.S. bills and comprise an equal number of output bins, one associated with each denomination. These discriminators also include a reject bin for receiving all bills which cannot be identified by the discriminating unit. These bills may later be examined by an operator and then either re-fed through the discriminator or set aside as unacceptable.

Depending on the design of a discriminator, bills may be transported and scanned either along their long dimension or their narrow dimension. For a discriminator that transport bills in their narrow dimension, it is possible that a given bill may be oriented either face up or face down and either top edge first ("forward" direction) or top edge last ("reverse" direction). For discriminators that transport bills in their long dimension, it is possible that a given bill may be oriented either face up or face down and either left edge first ("forward" direction) or left edge last ("reverse" direction). The manner in which a bill must be oriented as it passes a discriminating unit depends on the characteristics of the discriminator. Some discriminators are capable of identifying the denomination of a bill only if it is fed with a precise orientation, e.g., face up and top edge first. Other discriminators are capable of identifying bills provided they are "faced" (i.e., fed with a predetermined face orientation, that is all face up or all face down). For example, such a discriminator may be able to identify a bill fed face up regardless of whether the top edge is fed first or last. Other discriminators are capable of identifying the denomination fed with any orientation. However, whether a given discriminator can discriminate between bills fed with different orientations depends on the discriminating method used. For example, a discriminator that discriminates bills based on patterns of transmitted light may be able to identify the denomination of a forward fed bill regardless of whether the bill is fed face up or face down, but the same discriminator would not be able to discriminate between a bill fed face up and a bill fed face down.

Currently, discriminators are known which discriminate and/or sort by denomination when bills are properly faced. In such systems, all reverse-faced bills are not identified and are routed to a reject receptacle. Also discriminators are known which discriminate and/or sort between all bills facing up and all bills facing down. For example, in a multi-output pocket system, all face up bills, regardless of denomination, may be routed to a first pocket and all face down bills, regardless of denomination, may be routed to a second pocket. Furthermore, there is currently known discriminators designed to accept a stack of faced bills and flag the detection of a reverse-faced bill, thus allowing the reverse-faced bill to be removed from the stack. However, there remains a need for a discriminator that can detect and flag the presence of a bill oriented with an incorrect forward/reverse orientation and a discriminator that can sort between forward-oriented bills and reverse-oriented bills.

Furthermore, for a number of reasons, a discriminating unit may be unable to determine the denomination of a bill. These reasons include a bill being excessively soiled, worn, or faded, a bill being torn or folded, a bill being oriented in a manner that the discriminating unit cannot handle, and the discriminating unit having poor discriminating performance. Furthermore, the discriminating unit and/or a separate authenticating unit may determine that a bill is not genuine. In current discriminators, such unidentified or non-genuine bills are deposited in a reject receptacle.

A characteristic of the above described discriminators is that the value of any rejected unidentified bills is not added to the running total of the aggregate value of the stack of bills nor do the counters keeping track of the number of each currency denomination reflect the rejected unidentified bills. While this is desirable with respect to bills which are positively identified as being fake, it may be undesirable with respect to bills which were not identified for other reasons even though they are genuine bills. While the bills in a reject receptacle may be re-fed through the discriminator, the operator must then add the totals from the first batch and the second batch together. Such a procedure can be inefficient in some situations. Also, if a bill was rejected the first time because it was, for example, excessively soiled or too worn, then it is likely that the bill will remain unidentified by the discriminating unit even if re-fed.

A problem with the above described situations where the totals and/or counts do not reflect all the genuine bills in a stack is that an operator must then count all the unidentified genuine bills by hand and add such bills to separately generated totals. As a result the chance for human error increases and operating efficiency decreases. Take for example a bank setting where a customer hands a teller a stack of currency to be deposited. The teller places the stack of bills in a discriminator, the display on the discriminator indicates that a total of $730 has been identified. However, fourteen genuine bills remain unidentified. As a result, the teller must count these fourteen bills by hand or re-fed through the discriminator and then add their total to the $730 total. An error could result from the teller miscounting the unidentified bills, the teller forgetting to add the two totals together, or the teller overlooking the unidentified bills entirely and only recording a deposit of $730. Moreover, even if the teller makes no mistakes, the efficiency of the teller is reduced by having to manually calculate additional totals. The decrease in efficiency is further aggravated where detailed records must be maintained about the specific number of each denomination processed during each transaction.

Therefore, there is a need for a currency discriminator which is capable of conveniently and efficiently accommodating genuine bills that, for whatever reason, remain unidentified after passing through the discriminating unit of a discriminator.

A number of methods have been developed for authenticating the genuineness of security documents. These methods include sensing magnetic, optical, conductive, and other characteristics of documents under test. In general, it has been found that no single authentication test is capable of detecting all types of counterfeit documents while at the same time not rejecting any genuine documents. Therefore, more than one test may be employed whereby a first test is used to detect certain types of counterfeits and additional tests are used to detect other types of counterfeits.

It has been known that the illumination of certain substances with ultraviolet light causes the substances to fluoresce, that is, to emit visible light. Some documents employ fluorescent materials as a security feature to inhibit counterfeiting. Typically, these fluorescent security features comprise a marking which is visibly revealed when the document is illuminated with ultraviolet light. Previous methods have been developed to authenticate such documents by sensing the fluorescent light emitted by a document illuminated by ultraviolet light and comparing the sensed fluorescent light to the fluorescent light emitted by genuine documents.

Conversely, some documents, such as United States currency, are manufactured from special paper designed not to fluoresce under ultraviolet light. Previously known authenticating methods for such documents have sensed for the emission of fluorescent light under ultraviolet illumination and have rejected as counterfeit those documents emitting fluorescent light.

However, it has been found that the presently known ultraviolet authentication methods do not detect all types of counterfeits. For example, while many counterfeit United States bills do emit fluorescent light under ultraviolet illumination, some counterfeit United States bills do not.

### Summary Of The Invention

It is an object of the present invention to provide an improved method and apparatus for authenticating US paper currency.

It is an object of the present invention to provide an improved method and apparatus for identifying, authenticating, and counting currency bills comprising a plurality of currency denominations.

It is an object of the present invention to provide an improved method and apparatus for discriminating among documents of different types including currency documents of different denominations.

It is an object of the present invention to provide an improved method and apparatus for discriminating among currency bills comprising a plurality of currency denominations.

It is another object of this invention to provide an improved method and apparatus of the above kind which is capable of efficiently discriminating among, authenticating, and counting bills of several currency denominations at a high speed and with a high degree of accuracy.

It is an object of the present invention to provide an improved method and apparatus for authenticating US currency documents by illuminating a document with ultraviolet light.

It is another object of the present invention to provide an improve method and apparatus for authenticating documents which improves the ability of a system to accurately reject improper documents while reducing the likelihood of rejecting genuine documents.

Other objects and advantages of the invention will become apparent upon reading the following detailed description in conjunction with the accompanying drawings.

As far as the method is concerned, the object is achieved by the features of claim 1. As far as the apparatus is concerned, the object is achieved by the features of claim 13. Preferred embodiments of the invention are subject matter of the respective dependent claims.

According to a preferred embodiment of the present invention, a document to be authenticated is illuminated with ultraviolet light and the amount of ultraviolet light which is reflected off the document is measured. Based on the amount of ultraviolet light which is detected, the document is either authenticated or rejected. The documents being authenticated are United States currency, a bill is rejected if a high level of reflected ultraviolet light is not detected.

In another preferred embodiment, the above objectives are achieved by illuminating a document with ultraviolet light and measuring both the amount of reflected ultraviolet light and the amount of emitted visible light. Based on the amount of ultraviolet light detected and the amount of visible light detected, a document is either authenticated or rejected. The documents being authenticated are United States currency, a bill is rejected if either a high level of reflected ultraviolet light is not detected or even a low level of visible light is detected.

As explained above, it is known that some counterfeit United States bills fluoresce, or emit visible light, when illuminated by ultraviolet light. As genuine United States currency does not fluoresce, the emission of visible light has been employed as a means of detecting counterfeit United States currency. However, it has been found that not all counterfeit United States bills fluoresce; and hence, such counterfeits will not be detected by the above described fluorescence test.

It has been found that genuine United States currency reflects a high level of ultraviolet light when illuminated by an ultraviolet light source. It has also been found that some counterfeit United States bills do not reflect a high level of ultraviolet light. Such counterfeit bills may or may not also fluoresce under ultraviolet light. The present invention employs an authentication test wherein the amount of reflected ultraviolet light is measured and a bill is rejected if it does not reflect a high amount of ultraviolet light. By employing such a test, counterfeit United States bills which do not reflect a high level of ultraviolet light may be properly rejected.

While not all counterfeit United States bills fail to reflect a high level of ultraviolet light and hence not all counterfeit United States bills will be detected using this test, the present invention provides an additional means for detecting counterfeit bills which might otherwise go undetected. Furthermore, the likelihood of a counterfeit United States bill going undetected may be further reduced by employing an alternative embodiment of the present invention wherein both the amount of reflected ultraviolet light and the amount of emitted visible light are measured. In such a system, a bill is rejected as counterfeit if either it fails to reflect a high level of ultraviolet light or it fluoresces.

The above described embodiments may be adapted For instance some genuine documents may be designed to reflect ultraviolet light only in certain locations and/or in a predetermined pattern. An alternative embodiment of the present invention may be designed to accept documents which exhibit similar characteristics while rejecting those which do not. Likewise, an alternative embodiment of the present invention may be employed to authenticate documents based on both their characteristics with respect to reflected ultraviolet light and their characteristics with respect to fluorescent emissions, e.g., detecting the amount, location, and/or pattern of fluorescent emissions.

### Brief Description Of The Drawings

FIG 1a is a side view of a preferred embodiment of a document authenticating system according to the present invention;
FIG. 1b is a top view of the preferred embodiment of FIG. 1a along the direction 1b;
FIG. 1c is a top view of the preferred embodiment of FIG. 1a along the direction 1c; and
FIG. 2 is a functional block diagram illustrating a preferred embodiment of a document authenticating system according to the present invention.

### Detailed Description Of The Preferred Embodiments

While the invention is susceptible to various modifications and alternative forms, specific embodiments thereof have been shown by way of example in the drawings and will herein be described in detail. It should be understood, however, that it is not intended to limit the invention to the particular forms disclosed, but on the contrary, the intention is to cover all modifications, equivalents, and alternatives falling within the scope of the invention as defined by the appended claims.

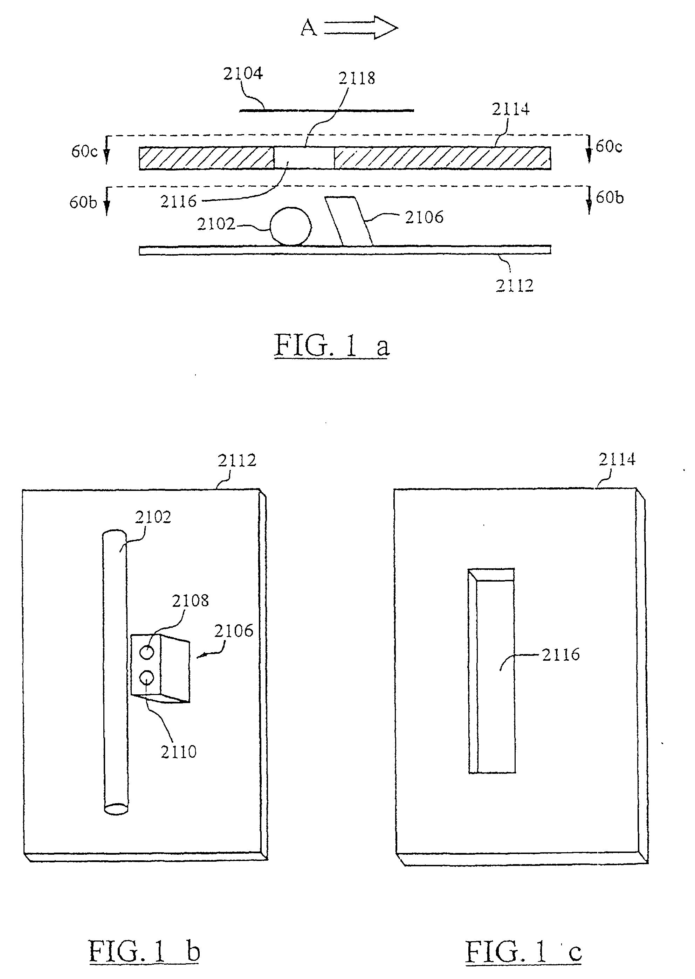

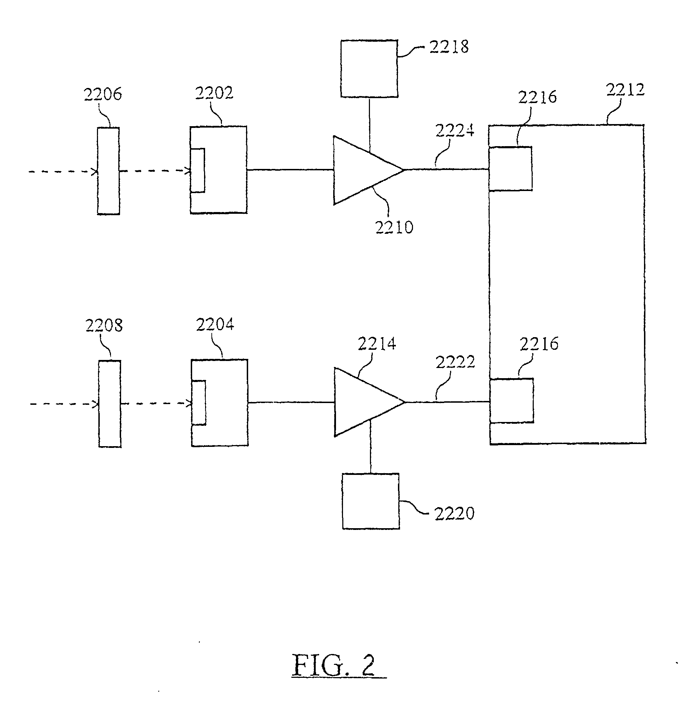

According to a preferred embodiment of the present invention, a currency discrimination system is described in connection with FIGs. 1 and 2.

Referring now to FIGs. 1a to 1c, there is shown a side view of a preferred embodiment of a document authenticating system according to the present invention, a top view of the preferred embodiment of FIG. 1a along the direction 1b, and a top view of the preferred embodiment of FIG 1a along the direction 1c, respectively. An ultraviolet ("UV") light source 2102 illuminates a document 2104. Depending upon the characteristics of the document, ultraviolet light may be reflected of the document and/or fluorescent light may be emitted from the document. A detection system 2106 is positioned so as to receive any light reflected or emitted toward it but not to receive any UV light directly from the light source 2102. The detection system 2106 comprises a UV sensor 2108, a fluorescence sensor 2110, filters, and a plastic housing. The light source 2102 and the detection system 2106 are both mounted to a printed circuit board 2112. The document 2104 is transported in the direction indicated by arrow A by a transport system (not shown). The document is transported over a transport plate 2114 which has a rectangular opening 2116 in it to permit passage of light to and from the document. In a preferred embodiment of the present invention, the rectangular opening 2116 is 1.375 inches (3.493 cm) by 0.375 inches (0.953 cm). To minimize dust accumulation onto the light source 2102 and the detection system 2106 and to prevent document jams, the opening 2116 is covered with a transparent UV transmitting acrylic window 2118. To further reduce dust accumulation, the UV light source 2102 and the detection system 2106 are completely enclosed within a housing (not shown) comprising the transport plate 2114.

Referring now to FIG. 2, there is shown a functional block diagram illustrating a preferred embodiment of a document authenticating system according to the present invention. FIG. 2 shows an UV sensor 2202, a fluorescence sensor 2204, and filters 2206, 2208 of a detection system such as the detection system 2106 of FIG. 1. Light from the document passes through the filters 2206, 2208 before striking the sensors 2202, 2204, respectively. An ultraviolet filter 2206 filters out visible light and permits UV light to be transmitted and hence to strike UV sensor 2202. Similarly, a visible light filter 2208 filters out UV light and permits visible light to be transmitted and hence to strike fluorescence sensor 2204. Accordingly, UV light, which has a wavelength below 400 nm, is prevented from striking the fluorescence sensor 2204 and visible light, which has a wavelength greater than 400 nm, is prevented from striking the UV sensor 2202. In a preferred embodiment the UV filter 2206 transmits light having a wavelength between about 260 nm and about 380 nm and has a peak transmittance at 360 nm. In a preferred embodiment, the visible light filter 2208 is a blue filter and preferably transmits light having a wavelength between about 415 nm and about 620 nm and has a peak transmittance at 450 nm. The above preferred blue filter comprises a combination of a blue component filter and a yellow component filter. The blue component filter transmits light having a wavelength between about 320 nm and about 620 nm and has a peak transmittance at 450 nm. The yellow component filter transmits light having a wavelength between about 415 nm and about 2800 nm. Examples of suitable filters are UG1 (UV filter), BG23 (blue bandpass filter), and GG420 (yellow longpass filter), all manufactured by Schott. In a preferred embodiment the filters are about 8 mm in diameter and about 1.5 mm thick.

The UV sensor 2202 outputs an analog signal proportional to the amount of light incident thereon and this signal is amplified by amplifier 2210 and fed to a microcontroller 2212. Similarly, the fluorescence sensor 2204 outputs an analog signal proportional to the amount of light incident thereon and this signal is amplified by amplifier 2214 and fed to a microcontroller 2212. Analog-to-digital converters 2216 within the microcontroller 2212 convert the signals from the amplifiers 2210, 2214 to digital and these digital signals are processed by the software of the microcontroller 2212. The UV sensor 2202 may be, for example, an ultraviolet enhanced photodiode sensitive to light having a wavelength of about 360 nm and the fluorescence sensor 2204 may be a blue enhanced photodiode sensitive to light having a wavelength of about 450 nm. Such photodiodes are available from, for example, Advanced Photonix, Inc., Massachusetts. The microcontroller 2212 may be, for example, a Motorola 68HC16.

The exact characteristics of the sensors 2202, 2204 and the fliers 2206, 2208 including the wavelength transmittance ranges of the above filters are not as critical to the present invention as the prevention of the fluorescence sensor from generating an output signal in response to ultraviolet light and the ultraviolet sensor from generating an output signal in response to visible light. For example, instead of, or in addition to, filters, a authentication system according to the present invention may employ an ultraviolet sensor which is not responsive to light having a wavelength longer than 400 nm and/or a fluorescence sensor which is not responsive to light having a wavelength shorter than 400 nm.

Calibration potentiometers 2218, 2220 permit the gains of amplifiers 2210, 2214 to be adjusted to appropriate levels. Calibration may be performed by positioning a piece of white fluorescent paper on the transport plate 2114 so that it completely covers the rectangular opening 2116 of FIG. 1. The potentiometers 2218, 2220 may then be adjusted so that the output of the amplifiers 2210, 2214 is 5 volts.

The document authenticating system as illustrated in FIG. 2, with respect to the authentication of U.S. currency will now be described. As discussed above, it has been determined that genuine United States currency reflects a high level of ultraviolet light and does not fluoresce under ultraviolet iliumination. It has also been determined that under ultraviolet illumination counterfeit United States currency exhibits one of the four sets of characteristics listed below:
1) Reflects a low level of ultraviolet light and fluoresces;
2) Reflects a low level of ultraviolet light and does not fluoresce;
3) Reflects a high level of ultraviolet light and fluoresces;
4) Reflects a high level of ultraviolet light and does not fluoresce.
Counterfeit bills in categories (1) and (2) may be detected by a currency authenticator employing an ultraviolet light reflection test according to a preferred embodiment of the present invention. Counterfeit bills in category (3) may be detected by a currency authenticator employing both an ultraviolet reflection test and a fluorescence test according to another preferred embodiment of the present invention. Only counterfeits in category (4) are not detected by the authenticating methods of the present invention.

According to a preferred embodiment of the present invention, fluorescence is determined by any signal that is above the noise floor. Thus, the amplified fluorescent sensor signal 2222 will be approximately 0 volts for genuine U.S. currency and will vary between approximately 0 and 5 volts for counterfeit bills depending upon their fluorescent characteristics. Accordingly, an authenticating system according to a preferred embodiment of the present invention will reject bills when signal 2222 exceeds approximately 0 volts.

According to a preferred embodiment of the present invention, a high level of reflected UV light ("high UV") is indicated when the amplified UV sensor signal 2224 is above a predetermined threshold. The high/low UV threshold is a function of lamp intensity and reflectance. Lamp intensity can degrade by as much as 50% over the life of the lamp and can be further attenuated by dust accumulation on the lamp and the sensors. The problem of dust accumulation is mitigated by enclosing the lamp and sensors in a housing as discussed above. An authenticating system according to a preferred embodiment of the present invention tracks the intensity of the UV light source and readjusts the high/low threshold accordingly. The degradation of the UV light source may be compensated for by periodically feeding a genuine bill into the system, sampling the output of the UV sensor, and adjusting the threshold accordingly. Alternatively, degradation may be compensated for by periodically samping the output of the UV sensor when no bill is present in the rectangular opening 2116 of the transport plate 2114. It is noted that a certain amount of UV light is always reflected off the acrylic window 2118. By periodically sampling the output of the UV sensor when no bill is present, the system can compensate for light source degradation. Furthermore, such sampling could also be used to indicate to the operator or the system when the ultraviolet light source has burned out or otherwise requires replacement. This may be accomplished, for example, by means or a display reading or an illuminated light emitting diode ("LED"). The amplified ultraviolet sensor signal 2224 will initially vary between 1.0 and 5.0 volts depending upon the UV reflectance characteristics of the document being scanned and will slowly drift downward as the light source degrades. In an alternative preferred embodiment to a preferred embodiment wherein the threshold level is adjusted as the light source degrades, the sampling of the UV sensor output may be used to adjust the gain of the amplifier 2210 thereby maintaining the output of the amplifier 2210 at its initial levels

It has been found that the voltage ratio between counterfeit and genuine U.S. bills varies from a discernable 2-to-1 ratio to a non-discernable ratio. According to a preferred embodiment of the present invention a 2-to-1 ratio is used to discriminate between genuine and counterfeit bills. For example, if a genuine U.S. bill generates an amplified UV output sensor signal 2224 of 4.0 volts, documents generating an amplified UV output sensor signal 2224 of 2.0 volts or less will be rejected as counterfeit. As described above, this threshold of 2.0 volts may either be lowered as the light source degrades or the gain of the amplifier 2210 may be adjusted so that 2.0 volts remains an appropriate threshold value.

According to a preferred embodiment of the present invention, the determination of whether the level of UV reflected off a document is high or low is made by sampling the output of the UV sensor at a number of intervals, averaging the readings, and comparing the average level with the predetermined high/low threshold. Alternatively, a comparison may be made by measuring the amount of UV light reflected at a number of locations on the bill and comparing these measurements with those obtained from genuine bills. Alternatively, the output of one or more UV sensors may be processed to generate one or more patterns of reflected UV light and these patterns may be compared to the patterns generated by genuine bills. Such a pattern generation and comparison technique may be performed by modifying an optical pattern technique such as that disclosed in United States Pat. No. 5,295,196 or in United States patent application Serial No. 08/287.882 filed August 9. 1994 for a "Method and Apparatus for Document Identification."

In a similar manner, the presence of fluorescence may be performed by sampling the output of the fluorescence sensor at a number of intervals. However, in a preferred embodiment, a bill is rejected as counterfeit U.S. currency if any of the sampled outputs rise above the noise floor. However, the alternative methods discussed above with respect to processing the signal or signals of a UV sensor or sensors may also be employed, especially with respect to currencies of other countries or other types of documents which may employ as security features certain locations or patterns of fluorescent materials.

A currency authenticating system according to the present invention may be provided with means, such as a display, to indicate to the operator the reasons why a document has been rejected, e.g., messages such as "UV FAILURE" or "FLUORESCENCE FAILURE." A currency authenticating system according to the present invention may also permit the operator to selectively choose to activate or deactivate either the UV reflection test or the fluorescence test or both. A currency authenticating system according to the present inventon may also be provided with means for adjusting the sensitivities of the UV reflection and/or fluorescence test, for example, by adjusting the respective thresholds. For example, a system according to the present invention may permit the high/low threshold to be adjusted, for example, either in absolute voltage terms or in genuine/suspect ratio terms.

## Claims

1. A method of authenticating documents relative to being genuine United States paper currency comprising the steps of
illuminating a document (2104) with ultraviolet light;
detecting ultraviolet light reflected by said document;
**characterized by**
determining the authenticity of said document based upon comparison of characteristics of ultraviolet light reflected from said document with characteristics of ultraviolet light reflected from genuine United States paper currency illuminated with ultraviolet light.

2. The method of claim 1 wherein a negative determination of authenticity is made regarding said documents if a relatively high amount of ultraviolet light is not reflected from said document.

3. The method according to any of claims 1-2 wherein a positive determination of authenticity is permitted to be made only if an amount of ultraviolet light detected by said step of detecting ultraviolet light reflected from said document exceeds a predetermined threshold.

4. The method according to any of claims 1-3 wherein a negative determination of authenticity is made regarding said document if an amount of ultraviolet light detected by said step of detecting ultraviolet light reflected from said document does not exceed a predetermined threshold.

5. The method according to claim 4 wherein said predetermined threshold is set such that a negative determination of authenticity is made if an amount of ultraviolet light detected by said step of detecting ultraviolet light reflected by said document is less than or equal to one-half an amount of ultraviolet light expected to be detected from a genuine United States bill.

6. The method according to any of claims 1-5 wherein a detector (2202) is used for said step of detecting ultraviolet light reflected by said document;
wherein said detector generates an output voltage based on the amount of ultraviolet light detected; and
wherein a negative determination of authenticity is made if the voltage generated by said step of detecting ultraviolet light reflected by said document is less than or equal to one-half a voltage expected for a genuine document relative to which authenticity is to be determined.

7. The method according to any of claims 1-6 wherein said step of detecting ultraviolet light reflected by said document comprises taking a number of samples of amounts of ultraviolet light reflected by said document and averaging said samples to obtain an average and wherein said step of determining the authenticity of said document employs said average.

8. The method according to any of claims 1-7 wherein said detecting step further comprises the step of filtering out light having a wavelength shorter than about 260 nm and light having a wavelength longer than about 380 nm.

9. The method according to any claims 1-8 further comprising the step of detecting visible light emitted from said document and wherein said step of determining the authenticity of said document is additionally based upon a comparison of the visible light emitted from said document with the visible light emitted from a genuine document illuminated with ultraviolet light.

10. The method of claim 9 wherein a positive determination of authenticity is made regarding said document only if a relatively high amount of ultraviolet light is reflected from said document and virtually no amount of visible light is emitted from said document.

11. The method according to any of claims 9-10 wherein a positive determination of authenticity is made regarding said document only if an amount of ultraviolet light reflected from said document exceeds a first predetermined threshold and an amount of visible light emitted from said document is below a second predetermined threshold.

12. The method according to any of claims 9-11 wherein said step of detecting ultraviolet light reflected by said document comprises taking a number of samples of amounts of ultraviolet light reflected by said document and averaging said samples to obtain a reflected ultraviolet average and wherein said step of detecting visible light emitted from said document comprises taking a number of samples of amounts of visible light emitted from said document; and wherein a negative determination of authenticity is made regarding said document if either sand reflected ultraviolet average does not exceed a first predetermined threshold or any of said samples of the amount of visible light exceeds a second predetermined threshold.

13. A device for authenticating documents relative to being genuine United States paper currency comprising:
an ultraviolet light source (2102) for illuminating a document (2104) to be tested;
an ultraviolet light detector (2202) for generating an output signal responsive to ultraviolet light reflected by said document;
**characterized by**
a signal processor (2212) for receiving said ultraviolet detector output signal and determining the authenticity of said document based upon said output signal by comparing said output signal to a signal associated with characteristics of ultraviolet light reflected from genuine United States paper currency upon illumination with ultraviolet light.

14. The device of claim 13 wherein said ultraviolet light detector comprises a photodetector (2202) and an ultraviolet filter (2206) wherein light from said document passes through said ultraviolet filter before striking said photodetector and wherein said ultraviolet filter filters out light having a wavelength shorter than about 260 nm and light having a wavelength longer that about 380 nm.

15. The device according to any of claims 13-14 wherein said processor (2212) is adapted to make a negative determination of authenticity regarding said document if said output signal indicates that a relatively high amount of ultraviolet light is not reflected from said document.

16. The device according to any of claims 13-15 wherein said processor (2212) is adapted to make a negative determination of authenticity regarding said document if an amount of ultraviolet light reflected from said document as indicated by said output signal of said ultraviolet light detector (2202) does not exceed a predetermined threshold.

17. The device of claim 16 wherein said predetermined threshold is set such that a negative determination of authenticity is made if an amount of ultraviolet light detected by said ultraviolet light detector (2202) is less than or equal to one-half of an amount of ultraviolet light expected to be detected from a genuine United States bill.

18. The device according to any of claims 13-17 wherein said processor (2212) is adapted to permit a positive determination of authenticity to be made only if an amount of ultraviolet light detected exceeds a predetermined threshold.

19. The device according to any of claims 13-18 wherein said detector generates an output voltage based on the amount of ultraviolet light detected; and wherein said processor is adapted to make a negative determination of authenticity if the voltage generated by said detector (2202) is a less than or equal to one-half a voltage expected for a genuine document relative to which authenticity is to be determined.

20. The device according to any of claims 13-19 further comprising a visible light detector (2204) for generating an output signal responsive to visible light emitted by said document upon illumination of said document by said ultraviolet light source (2102) and wherein said signal processor (2212) receives said visible detector output signal and determines the authenticity of said document based additionally upon said visible detector output signal.

21. The device of claim 20 wherein said processor (2212) is adapted to make a positive determination of authenticity regarding said document only if a relatively high amount of ultraviolet light is reflected from said document as indicated by said ultraviolet detector output signal and virtually no amount of visible light is emitted from said document as indicated by said visible detector output signal.

22. The device according to any of claims 20-21 wherein a negative determination of authenticity is made regarding said document if either (1) less than a first predetermined amount of reflected ultraviolet light is detected from said document or (2) more than a second predetermined amount of visible light is detected from said document.

23. The device according to any of claims 20-22 wherein said processor (2212) is adapted to make a positive determination of authenticity regarding said document only if an amount of ultraviolet light reflected from said document exceeds a first predetermined threshold and an amount of visible light emitted from said document is below a second predetermined threshold.

24. The device according to any of claims 13-23 further comprising:
means for selectively indicating whether authenticity of said document should be evaluated based on the output signal of the ultraviolet light detector (2202).

25. The device according to any of claims 20-23 further comprising.
means for selectively indicating whether authenticity of said document should be evaluated based on the output signal of the ultraviolet light detector (2202), and
means for selectively indicating whether authenticity of said document should be evaluated based on the output signal of the visible light detector (2204).

## Patentansprüche

1. Ein Verfahren zum Authentifizieren von Dokumenten in Bezug darauf echte US-Papierwährung zu sein, umfassend die Schritte:
Beleuchten eines Dokuments (2104) mit ultraviolettem Licht;
Ermittein von ultraviolettem Licht, das durch das Dokument reflektiert wird;
**gekennzeichnet durch**
Bestimmen der Authentizität des Dokuments basierend auf einem Vergleich von Eigenschaften von ultraviolettem Licht, das von dem Dokument reflektiert wird mit Eigenschaften von ultraviolettem Licht, das von echter, mit ultraviolettem Licht beleuchter US-Papierwährung reflektiert wird.

2. Verfahren gemäß Anspruch 1, worin eine negative Bestimmung einer Authentizität gemacht wird in Bezug auf dieses Dokument, wenn ein relativ hoher Betrag von ultraviolettem Licht nicht von dem Dokument reflektiert wird.

3. Das Verfahren gemäß einem der Ansprüche 1-2, worin eine positive Bestimmung der Authentizität ermöglicht wird nur dann gemacht zu werden, wenn ein Betrag von ultraviolettem Licht, der durch den Schritt des Ermittelns von ultraviolettem Licht, das von dem Dokument reflektiert wurde, einen vorbestimmten Schwellwert überschreitet.

4. Das Verfahren gemäß einem der Ansprüche 1-3, worin eine negative Bestimmung der Authentizität des Dokuments gemacht wird, wenn ein Betrag des ultravioletten Lichts, das durch den Schritt des Ermittelns von ultraviolettem Licht, das von dem Dokument reflektiert wird, nicht einen vorbestimmten Schwellwert überschreitet.

5. Das Verfahren gemäß Anspruch 4, worin der vorbestimmte Schwellwert so festgelegt ist, dass eine negative Bestimmung der Authentizität gemacht wird, wenn ein Betrag von ultraviolettem Licht, das durch den Schritt des Ermittelns von ultraviolettem Licht, das von dem Dokument reflektiert wurde, geringer ist als oder gleich ist wie die Hälfte des Betrags von ultraviolettem Licht, das erwartet wird, von einer echten US-Banknote ermittelt zu werden.

6. Das Verfahren gemäß einem der Ansprüche 1-5, worin ein Detektor (2202) verwendet wird für den Schritt des Ermittelns von ultraviolettem Licht, das reflektiert wird durch das Dokument;
worin der Detektor eine Ausgangsspannung, basierend auf der Menge des ermittelten ultravioletten Lichts erzeugt; und
worin eine negative Bestimmung der Authentizität gemacht wird, wenn die Spannung, die durch den Schritt des Ermittelns von ultraviolettem Licht, das von dem Dokument reflektiert wurde, erzeugt wurde, geringer ist als oder gleich ist wie die Hälfte einer Spannung, die erwartet wird, von einem echten Dokument in Bezug auf welches die Authentizität zu bestimmen ist.

7. Das Verfahren gemäß einem der Ansprüche 1-6, worin der Schritt des Ermittelns von ultraviolettem Licht, das durch das Dokument reflektiert wurde, das Entnehmen einer Anzahl von Abfragen der Menge an ultraviolettem Licht, das durch das Dokument reflektiert wurde, und das Mitteln der Abfragen umfasst, um einen Mittelwert zu erhalten, und worin der Schritt des Bestimmens der Authentizität des Dokuments den Mittelwert verwendet.

8. Das Verfahren gemäß einem der Ansprüche 1-7, worin der Ermittelungsschritt weiter den Schritt des Ausfilterns von Licht mit einer Wellenlänge von kürzer als ungefähr 260 nm und Licht mit einer Wellenlänge von länger als ungefähr 380 nm umfasst.

9. Das Verfahren gemäß einem der Ansprüche 1-8, das weiter den Schritt des Ermittelns von sichtbarem Licht umfasst, das von dem Dokument ausgesendet wird, und worin der Schritt des Bestimmens der Authentizität des Dokuments zusätzlich auf einem Vergleich des sichtbaren Lichts, das von dem Dokument ausgesendet wird, mit dem sichtbaren Licht, das von einem echten Dokument ausgesendet wird, das mit ultraviolettem Licht beleuchtet wird, basiert.

10. Das Verfahren gemäß Anspruch 9, worin eine positive Bestimmung der Authentizität mit Bezug auf das Dokument nur durchgeführt wird, wenn ein relativ hoher Betrag an ultraviolettem Licht von dem Dokument reflektiert wird und nahezu kein Betrag von sichtbarem Licht von dem Dokument ausgesendet wird.

11. Das Verfahren gemäß einem der Ansprüche 9-10, worin eine positive Bestimmung der Authentizität im Bezug auf das Dokument nur gemacht wird, wenn ein Betrag des ultravioletten Lichts, das von dem Dokument reflektiert wird, einen ersten vorbestimmten Schwellwert übersteigt, und ein Betrag von sichtbarem Licht, das von dem Dokument ausgesendet wird, unter einem zweiten vorbestimmten Schwellwert liegt.

12. Das Verfahren gemäß einem der Ansprüche 9-11, worin der Schritt des Ermittelns von ultraviolettem Licht, das von dem Dokument reflektiert wird, das Entnehmen von der Anzahl von Abfragen des Betrags des ultravioletten Lichts, das durch das Dokument reflektiert wurde, und das Mitteln der Abfragen umfasst, um einen reflektierten Ultraviolettmittelwert zu erhalten, und worin der Schritt des Ermittelns von sichtbarem Licht, das von dem Dokument ausgesendet wird, das Entnehmen einer Anzahl von Abfragen des Betrags von sichtbarem Licht, das von dem Dokument ausgestrahlt wurde, umfasst; und worin eine negative Bestimmung der Authentizität in Bezug auf dieses Dokument gemacht wird, wenn entweder der reflektierte Ultraviolettmittelwert nicht einen ersten vorbestimmten Schwellwert überschreitet oder eine dieser Abfragen des Betrags von sichtbarem Licht einen zweiten vorbestimmten Schwellwert übersteigt.

13. Eine Vorrichtung zum Authentifizieren von Dokumenten in Bezug darauf echte US-Papierwährung zu sein, umfassend:
eine Ultraviolettlichtquelle (2102) zum Beleuchten eines zu testenden Dokuments (2104);
einen Ultraviolettenlichtdetektor (2202) zum Erzeugen eines Ausgangssignals in Abhängigkeit des ultravioletten Lichts, das durch das Dokument reflektiert wird;
**gekennzeichnet durch**
einen Signalprozessor (2212) zum Empfangen des Ausgangssignals des Ultraviolettdetektors, um eine bestimmte Authentizität des Dokuments basierend auf dem Ausgangssignals **durch** Vergleichen des Ausgangssignals mit einem Signal, das mit Eigenschaften von ultraviolettem Licht, das von echter US-Papierwährung aufgrund einer Beleuchtung mit ultraviolettem Lichts reflektiert wurde zu bestimmen.

14. Die Vorrichtung gemäß Anspruch 13, worin der Ultraviolettlichtdetektor einen Fotodetektor (2202) und einen Ultraviolettfilter (2206) umfasst, worin Licht von dem Dokument durch den Ultraviolettfilter hindurchtritt bevor es den Fotodetektor trifft und worin der Ultraviolettfilter Licht mit einer Wellenlänge von kürzer als ungefähr 260 nm und Licht mit einer Wellenlänge von länger als ungefähr 380 nm ausfiltert.

15. Die Vorrichtung gemäß einem der Ansprüche 13-14, worin der Prozessor (2212) angepasst ist, eine negative Bestimmung der Authentizität im Bezug auf das Dokument vorzunehmen, wenn das Ausgangssignal anzeigt, dass ein relativ hoher Betrag an ultraviolettem Licht nicht von dem Dokument reflektiert wurde.

16. Die Vorrichtung gemäß einem der Ansprüche 13-15, worin der Prozessor (2212) angepasst, eine negative Bestimmung der Authentizität in Bezug auf das Dokument vorzunehmen, wenn ein Betrag des ultravioletten Lichts, das von dem Dokument, wie durch das Ausgangssignal des Ultraviolettdetektors (2202) angezeigt, reflektiert wurde, nicht einen vorbestimmten Schwellenwert übersteigt.

17. Die Vorrichtung gemäß Anspruch 16, worin der vorbestimmte Schwellwert so gesetzt ist, dass eine negative Bestimmung der Authentizität gemacht wird, wenn ein Betrag an ultraviolettem Licht, das durch den Ultraviolettlichtdetektor (2202) ermittelt wurde, geringer ist als oder gleich ist wie die Hälfte eines Betrags von ultraviolettem Licht, das erwartet wird, von einer echten US-Banknote ermittelt zu werden.

18. Die Vorrichtung gemäß einem der Ansprüche 13-17, worin der Prozessor (2212) angepasst ist, um die Durchführung einer positiven Bestimmung der Authentizität nur zu erlauben, wenn ein Betrag von ermittelten ultraviolettem Licht einen vorbestimmten Schwellwert übersteigt.

19. Die Vorrichtung gemäß einem der Ansprüche 13-18, worin der Detektor eine Ausgangsspannung erzeugt, die auf dem Betrag von dem ermittelten ultravioletten Licht basiert, und worin der Prozessor angepasst ist, eine negative Bestimmung der Authentizität vorzunehmen, wenn die durch den Detektor (2202) erzeugte Spannung geringer ist als oder gleich ist wie die Hälfte einer Spannung, die von einem echten Dokument im Bezug auf welches die Authentizität zu bestimmen ist, erwartet wird.

20. Die Vorrichtung gemäß einem der Ansprüche 13-19, die weiter umfasst einen Detektor (2204) für sichtbares Licht und zum Erzeugen eines Ausgangssignals in Abhängigkeit von sichtbarem Licht, das von dem Dokument ausgesendet wird aufgrund einer Beleuchtung des Dokuments durch die ultraviolette Lichtquelle (2102) und worin der Signalprozessor (2212) das Ausgangssignal des sichtbaren Detektors empfängt und die Authentizität des Dokuments zusätzlich auf der Basis von dem Ausgangssignals des sichtbaren Detektors bestimmt.

21. Die Vorrichtung gemäß einem der Ansprüche 20, worin der Prozessor (2212) angepasst ist, eine positive Bestimmung der Authentizität in Bezug auf das Dokument nur durchzuführen, wenn ein relativ hoher Betrag an ultraviolettem Licht von dem Dokument reflektiert wird, wie durch das Ausgangssignal des Ultraviolettdetektors angezeigt ist, und nahezu kein Betrag an sichtbarem Licht ausgesendet wird von dem Dokument, wie durch das Ausgangssignal des sichtbaren Detektors angezeigt ist.

22. Die Vorrichtung gemäß einem der Ansprüche 20-21, worin eine negative Bestimmung der Authentizität in Bezug auf das Dokument gemacht wird, wenn entweder (1) weniger als ein erster vorbestimmter Betrag von reflektiertem ultravioletten Licht ermittelt wird von dem Dokument oder (2) mehr als ein zweiter vorbestimmter Betrag von sichtbarem Licht von dem Dokument ermittelt wird.

23. Die Vorrichtung gemäß einem der Ansprüche 20-22, worin der Prozessor (2212) angepasst ist, eine positive Bestimmung der Authentizität in Bezug auf das Dokument nur zu machen, wenn ein Betrag des ultravioletten Lichts, das von dem Dokument reflektiert wird, einen ersten vorbestimmten Schwellschwert übersteigt und ein Betrag von sichtbarem Licht, das von dem Dokument ausgestrahlt wird, unter einem zweiten vorbestimmten Schwellwert bleibt.

24. Die Vorrichtung gemäß einem der Ansprüche 13-23, die weiter umfasst:
eine Einrichtung zum wahlweisen Anzeigen, ob die Authentizität des Dokuments bewertet werden sollte, basierend auf dem Ausgangssignal des Ultraviolettlichtdetektors (2202).

25. Die Vorrichtung gemäß einem der Ansprüche 20-23, die weiter umfasst:
eine Einrichtung zum wahlweisen Anzeigen, ob die Authentizität des Dokuments bewertet werden sollte, basierend auf dem Ausgangssignal des Ultraviolettlichtdetektors (2202), und
eine Einrichtung zum wahlweisen Anzeigen, ob die Authentizität des Dokuments bewertet werden sollte, basierend auf dem Ausgangssignal des sichtbaren Lichtdetektors (2204).

## Revendications

1. Procédé pour authentifier des documents vis-à-vis de l'unité monétaire fiduciaire véritable des Etats-Unis d'Amérique, comprenant les étapes consistant :
à illuminer un document (2104) par une lumière ultraviolette ;
à détecter la lumière ultraviolette réfléchie par ledit document ;
**caractérisé par**
la détermination de l'authenticité dudit document sur la base de la comparaison des caractéristiques de la lumière ultraviolette réfléchie par ledit document et des caractéristiques de la lumière ultraviolette réfléchie par l'unité monétaire fiduciaire véritable des Etats-Unis d'Amérique illuminée par une lumière ultraviolette.

2. Procédé selon la revendication 1, dans lequel une détermination négative de l'authenticité est établie eu égard auxdits documents si une quantité relativement importante de lumière ultraviolette n'est pas réfléchie par ledit document.

3. Procédé selon l'une quelconque des revendications 1 à 2, dans lequel une détermination positive de l'authenticité ne peut être établie que si une quantité de lumière ultraviolette détectée au cours de ladite étape consistant à détecter la lumière ultraviolette réfléchie par ledit document dépasse un seuil prédéterminé.

4. Procédé selon l'une quelconque des revendications 1 à 3, dans lequel une détermination négative de l'authenticité est établie eu égard audit document si une quantité de lumière ultraviolette détectée au cours de ladite étape consistant à détecter la lumière ultraviolette réfléchie par ledit document ne dépasse pas un seuil prédéterminé.

5. Procédé selon la revendication 4, dans lequel ledit seuil prédéterminé est fixé de telle sorte qu'une détermination négative de l'authenticité est établie si une quantité de lumière ultraviolette détectée au cours de ladite étape consistant à détecter la lumière ultraviolette réfléchie par ledit document est inférieure ou égale à la moitié d'une quantité de lumière ultraviolette dont la détection est attendue à partir d'un billet de banque véritable des Etats-Unis d'Amérique.

6. Procédé selon l'une quelconque des revendications 1 à 5, dans lequel un détecteur (2202) est utilisé au cours de ladite étape consistant à détecter la lumière ultraviolette réfléchie par ledit document ;
dans lequel ledit détecteur génère une tension de sortie sur la base de la quantité de lumière ultraviolette détectée ; et
dans lequel une détermination négative de l'authenticité est établie si la tension générée au cours de ladite étape consistant à détecter la lumière ultraviolette réfléchie par ledit document est inférieure ou égale à la moitié d'une tension attendue pour un document véritable vis-à-vis duquel l'authenticité doit être déterminée.

7. Procédé selon l'une quelconque des revendications 1 à 6, dans lequel ladite étape consistant à détecter la lumière ultraviolette réfléchie par ledit document comprend la prise d'un certain nombre d'échantillons de quantités de lumière ultraviolette réfléchie par ledit document et la prise de la moyenne desdits échantillons afin d'obtenir une moyenne, et dans lequel ladite étape consistant à déterminer l'authenticité dudit document emploie ladite moyenne.

8. Procédé selon l'une quelconque des revendications 1 à 7, dans lequel ladite étape de détection comprend, en outre, l'étape consistant à éliminer par filtrage une lumière ayant une longueur d'onde inférieure à 260 nm environ et une lumière ayant une longueur d'onde supérieure à 380 nm environ.

9. Procédé selon l'une quelconque des revendications 1 à 8, comprenant, en outre, l'étape consistant à détecter la lumière visible émise par ledit document, et dans lequel ladite étape consistant à déterminer l'authenticité dudit document est basée additionnellement sur une comparaison de la lumière visible émise par ledit document et la lumière visible émise par un document véritable illuminé par une lumière ultraviolette.

10. Procédé selon la revendication 9, dans lequel une détermination positive de l'authenticité eu égard audit document n'est établie que si une quantité relativement importante de lumière ultraviolette est réfléchie par ledit document et que virtuellement aucune quantité de lumière visible n'est émise par ledit document.

11. Procédé selon l'une quelconque des revendications 9 à 10, dans lequel une détermination positive de l'authenticité eu égard audit document n'est établie que si une quantité de lumière ultraviolette est réfléchie par ledit document dépasse un premier seuil prédéterminé et qu'une quantité de lumière visible émise par ledit document est en-deçà d'un second seuil prédéterminé.

12. Procédé selon l'une quelconque des revendications 9 à 11, dans lequel ladite étape consistant à détecter la lumière ultraviolette réfléchie par ledit document comprend la prise d'un certain nombre d'échantillons de quantités de lumière ultraviolette réfléchie par ledit document et la prise de la moyenne desdits échantillons afin d'obtenir une moyenne de la lumière ultraviolette réfléchie, et dans lequel ladite étape consistant à détecter la lumière visible émise par ledit document comprend la prise d'un certain nombre d'échantillons de quantités de lumière visible émise par ledit document ; et dans lequel une détermination négative de l'authenticité est établie eu égard audit document si, soit ladite moyenne de la lumière ultraviolette réfléchie ne dépasse pas un premier seuil prédéterminé, soit l'un quelconque desdits échantillons de la quantité de lumière visible dépasse un second seuil prédéterminé.

13. Dispositif pour authentifier des documents vis-à-vis de l'unité monétaire fiduciaire véritable des Etats-Unis d'Amérique, comprenant :
une source de lumière ultraviolette (2102) destinée à illuminer un document (2104) faisant l'objet d'un test ;
un détecteur de lumière ultraviolette (2202) destiné à générer un signal de sortie sensible à la lumière ultraviolette réfléchie par ledit document ;
**caractérisé par**
un processeur de signal (2212) destiné à recevoir ledit signal de sortie du détecteur de lumière ultraviolette et à déterminer l'authenticité dudit document sur la base dudit signal de sortie en comparant ledit signal de sortie à un signal associé aux caractéristiques de la lumière ultraviolette réfléchie par l'unité monétaire fiduciaire véritable des Etats-Unis d'Amérique illuminée par une lumière ultraviolette.

14. Dispositif selon la revendication 13, dans lequel ledit détecteur de lumière ultraviolette comprend un photodétecteur (2202) et un filtre de lumière ultraviolette (2206), dans lequel la lumière issue dudit document traverse ledit filtre de lumière ultraviolette avant d'être incidente sur ledit photodétecteur, et dans lequel ledit filtre de lumière ultraviolette élimine par filtrage une lumière ayant une longueur d'onde inférieure à 260 nm environ et une lumière ayant une longueur d'onde supérieure à 380 nm environ.

15. Dispositif selon l'une quelconque des revendications 13 à 14, dans lequel ledit processeur (2212) est conçu pour établir une détermination négative de l'authenticité eu égard audit document si ledit signal de sortie indique qu'une quantité relativement importante de lumière ultraviolette n'est pas réfléchie par ledit document.

16. Dispositif selon l'une quelconque des revendications 13 à 15, dans lequel ledit processeur (2212) est conçu pour établir une détermination négative de l'authenticité eu égard audit document si une quantité de lumière ultraviolette réfléchie par ledit document, telle qu'elle est indiquée par ledit signal de sortie dudit détecteur de lumière ultraviolette (2202), ne dépasse pas un seuil prédéterminé.

17. Dispositif selon la revendication 16, dans lequel ledit seuil prédéterminé est fixé de telle sorte qu'une détermination négative de l'authenticité est établie si une quantité de lumière ultraviolette détectée par ledit détecteur de lumière ultraviolette (2202) est inférieure ou égale à la moitié d'une quantité de lumière ultraviolette dont la détection est attendue à partir d'un billet de banque véritable des Etats-Unis d'Amérique.

18. Dispositif selon l'une quelconque des revendications 13 à 17, dans lequel ledit processeur (2212) est conçu pour permettre une détermination positive de l'authenticité que si une quantité de lumière ultraviolette détectée dépasse un seuil prédéterminé.

19. Dispositif selon l'une quelconque des revendications 13 à 18, dans lequel ledit détecteur génère une tension de sortie sur la base de la quantité de lumière ultraviolette détectée ; et dans lequel ledit processeur est conçu pour établir une détermination négative de l'authenticité si la tension générée par ledit détecteur (2202) est inférieure ou égale à la moitié d'une tension attendue pour un document véritable vis-à-vis duquel l'authenticité doit être déterminée.

20. Dispositif selon l'une quelconque des revendications 13 à 19, comprenant, en outre, un détecteur de lumière visible (2204) destiné à générer un signal de sortie sensible à la lumière visible émise par ledit document lors de l'illumination dudit document par ladite source de lumière violette (2102), et dans lequel ledit processeur de signal (2212) reçoit ledit signal de sortie du détecteur de lumière visible et détermine l'authenticité dudit document sur la base additionnelle dudit signal de sortie du détecteur de lumière visible.

21. Dispositif selon la revendication 20, dans lequel ledit processeur (2212) est conçu pour établir une détermination positive de l'authenticité eu égard audit document que si une quantité relativement importante de lumière ultraviolette est réfléchie par ledit document, telle qu'elle est indiquée par ledit signal de sortie du détecteur de lumière ultraviolette, et que si virtuellement aucune quantité de lumière visible n'est émise par ledit document, telle qu'elle est indiquée par ledit signal de sortie du détecteur de lumière visible.

22. Dispositif selon l'une quelconque des revendications 20 à 21, dans lequel une détermination négative de l'authenticité est établie eu égard audit document si, soit (1) une quantité inférieure à une première quantité prédéterminée de lumière ultraviolette réfléchie est détectée à partir dudit document, soit (2) une quantité supérieure à une seconde quantité prédéterminée de lumière visible est détectée à partir dudit document.

23. Dispositif selon l'une quelconque des revendications 20 à 22, dans lequel ledit processeur (2212) est conçu pour établir une détermination positive de l'authenticité eu égard audit document que si une quantité de lumière ultraviolette réfléchie par ledit document dépasse un premier seuil prédéterminé et qu'une quantité de lumière visible émise par ledit document est en-deçà d'un second seuil prédéterminé.

24. Dispositif selon l'une quelconque des revendications 13 à 23, comprenant, en outre :
des moyens destinés à indiquer sélectivement si l'authenticité dudit document doit être ou non évaluée sur la base du signal de sortie du détecteur de lumière ultraviolette (2202).

25. Dispositif selon l'une quelconque des revendications 20 à 23, comprenant, en outre :
des moyens destinés à indiquer sélectivement si l'authenticité dudit document doit être ou non évaluée sur la base du signal de sortie du détecteur de lumière ultraviolette (2202), et
des moyens destinés à indiquer sélectivement si l'authenticité dudit document doit être ou non évaluée sur la base du signal de sortie du détecteur de lumière visible (2204).
